# EUROPEAN PATENT APPLICATION

(11) **EP 4 678 442 A1**
(43) Date of publication of application: **14.01.2026**
(21) Application number: 24187451.0
(22) Date of filing: 09.07.2024
(51) Int. Cl.: B60K 7/00, B60K 17/10, B60K 17/14, B60K 17/356, F16H 61/4035, B60W 30/18

(54) **VEHICLE WITH IMPROVED MOTRICITY CONTROL**

(71) Applicant: VOLVO TRUCK CORPORATION, 405 08 Göteborg (SE)
(72) Inventor: CHAVRIER, Philemon, 69008 LYON (FR); Poussin, Olivier, 69008 LYON (FR)
(74) Representative: Lavoix

(57) **Abstract**

Vehicle (1) comprising:
- a front axle (2), a rear driving axle (3), a left front hydraulic motor (4) connected to a left front wheel (5), a right front hydraulic motor (6) connected to a right front wheel (7), a left rear hydraulic motor (8) connected to a left rear wheel (9), a right rear hydraulic motor (10) connected to a right rear wheel (11);
- a hydraulic circuit (21, 22, 23, 24, 25, 26, 27, 28, 29, 30, 31, 32, 33) hydraulically connecting all hydraulic motors, wherein the front and rear hydraulic motors are configured to be in a free-wheel mode under normal motricity conditions;
- a controller (50) causing, when the rotating speed of one of the rear wheels increases with respect to the rotating speed of all other wheels:
- the rear hydraulic motor connected to the rear wheel whose rotating speed increased and at least the corresponding front hydraulic motor connected to the front wheel on the same side of the rear wheel whose rotating speed increased to leave the free-wheel mode;
- the rear hydraulic motor, which left the free-wheel mode, to increase pressure in the hydraulic circuit. The increased pressure is transmitted to at least the corresponding front hydraulic motor thereby causing it to generate torque applied to the front wheel connected therewith.

## Description

### TECHNICAL FIELD

The disclosure relates generally to the field of motor vehicles. In particular aspects, the disclosure relates to a vehicle with improved control of motricity. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional vehicles having traction only at rear axles may lose traction in some difficult terrains, e.g. gravel roads, workplaces, icy roads, slippery road conditions, etc.

To mitigate such issue and improve motricity of a vehicle, one solution is to have a mechanical driven front axle. But this solution is heavy, costly, and the driving comfort is not as good as when using a standard front axle.

Another solution foresees the use of systems with hydraulic wheels motors that provide traction to the front wheels without any mechanically driven axle. These systems use a hydraulic pump to feed the hydraulic motors, which is connected to the vehicle's engine.

However, the installation of the pump is complicated, and its capability limits the use of such system to a certain speed, e.g. up to max 30km/h.

### SUMMARY

According to a first aspect of the disclosure, there is provided a vehicle comprising a front axle, a rear driving axle, a left front hydraulic motor connected to a left front wheel, a right front hydraulic motor connected to a right front wheel, a left rear hydraulic motor connected to a left rear wheel, and a right rear hydraulic motor connected to a right rear wheel;
- a hydraulic circuit that hydraulically connects all hydraulic motors, wherein the front and rear hydraulic motors are configured to be in a free-wheel mode under normal motricity conditions;
- a controller that causes, when the rotating speed of at least one of the rear wheels increases with respect to the rotating speed of all other wheels:
- at least the rear hydraulic motor connected to the rear wheel whose rotating speed increased and at least the corresponding front hydraulic motor connected to the front wheel on the same left or right side of the rear wheel whose rotating speed increased to leave the free-wheel mode;
- the at least rear hydraulic motor, which left the free-wheel mode, to increase pressure in the hydraulic circuit, the increased pressure being transmitted to at least the corresponding front hydraulic motor thereby causing it to generate torque applied to the front wheel connected therewith. The first aspect of the disclosure may seek to cope with the issue of vehicles having traction only at rear axles and that may lose traction in some difficult terrains. A technical benefit may include improving control and delivery of traction at least in such conditions.

Optionally in some examples, including in at least one preferred example, when the rotating speed of at least one of the rear wheels increases with respect to the rotating speed of all other wheels, the controller causes booth the left and right front hydraulic motors to leave the free-wheel mode. A technical benefit may include improving drivability.

Optionally in some examples, including in at least one preferred example, the hydraulic circuit comprises at least a first proportional valve configured to regulate, under the control of the controller, the distribution of pressure between at least the left and right front wheels. A technical benefit may include a further improved control of motricity and drivability.

Optionally in some examples, including in at least one preferred example, the controller controls the opening/closing of the first proportional valve to regulate the distribution of pressure between the left and right front wheels based on the actual steering angle of the front axle. A technical benefit may include an even further improved control of motricity and drivability.

Optionally in some examples, including in at least one preferred example, when the rotating speed of at least one of the rear wheels increases with respect to the rotating speed of all other wheels, the controller causes all hydraulic motors to leave the free-wheel mode. A technical benefit may include a further improved control of motricity.

Optionally in some examples, including in at least one preferred example, the hydraulic circuit comprises a second proportional valve configured to regulate, under the control of the controller the distribution of pressure between at least the left and right rear wheels. A technical benefit may include an even further improved control of motricity.

Optionally in some examples, including in at least one preferred, when the speed of the vehicle is below a predetermined threshold, the controller causes the left and right rear hydraulic motors to leave both the free-wheel mode. A technical benefit may include preventing the vehicle from being stuck, and/or rendering vehicle start easier.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

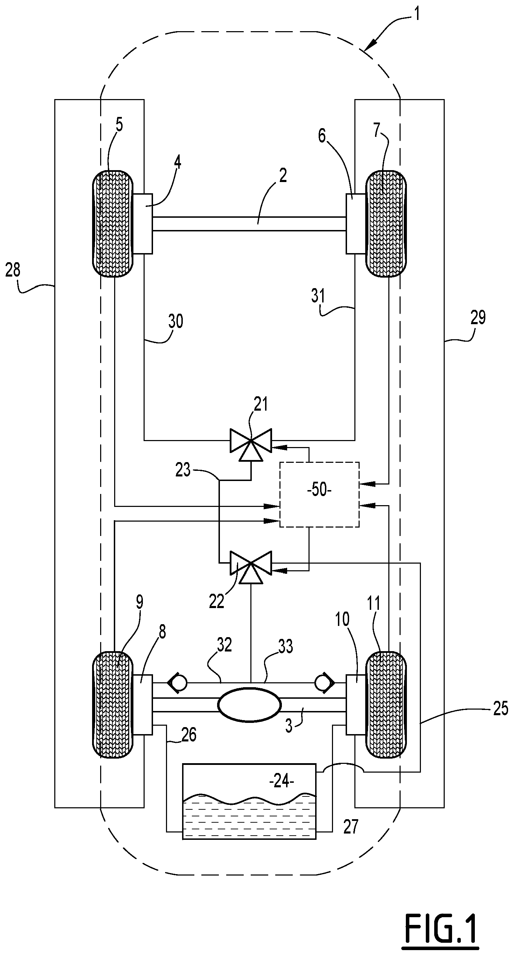

Examples are described in more detail below with reference to the appended FIG. FIG. 1 which schematically illustrates an exemplary vehicle according to an example.

### DETAILED DESCRIPTION

The detailed description set forth below provides information and examples of the disclosed technology with sufficient detail to enable those skilled in the art to practice the disclosure.

Conventional vehicles provided with traction only at the rear axle(s) may experience loss of traction in particular when operating on difficult terrains, such as gravel roads, workplaces, icy roads, slippery road conditions.

The vehicle according to the disclosure comprises a hydraulic system which may allow at least mitigating such issue by providing improved control of motricity.

FIG. 1 schematically shows an exemplary vehicle according to the disclosure indicated by the reference number 1.

The vehicle 1 comprises a front axle 2, a rear driving axle 3 each having mounted at the respective ends at least two corresponding wheels.

For instance, according to some aspects, and as illustrated in FIG. 1, the vehicle 1 comprises:
- a left front hydraulic motor 4 which is connected to a left front wheel 5 of the front axle 2;
- a right front hydraulic motor 6 which is connected to a right front wheel 7 of the front axle 2;
- a left rear hydraulic motor 8 which is connected to a left rear wheel 9 of the rear axle 3; and
- a right rear hydraulic motor 10 which is connected to a right rear wheel 11 of the rear axle 3.

All the front and rear hydraulic motors 4, 6, 8, 10 are configured to be in a free-wheel mode under normal motricity conditions. The term normal motricity has to be understood as a condition where traction is provided by the rear wheels only.

The vehicle 1 comprises a hydraulic circuit that hydraulically connects all hydraulic motors to each other.

The hydraulic circuit may be formed by sections that can be separated/connected to each other during operations.

For example, the hydraulic circuit may have two sub-circuits interconnected to each other, one connecting the front and rear left wheels 5 and 9, and the other connecting the front and rear right wheels 7 and 11.

The two sub-circuits may have one or more interconnection points so that, depending on the circumstances, they may be used separately or jointly.

In the exemplary embodiment illustrated in figure 1, the hydraulic circuit comprises a first proportional valve 21, a second proportional valve 22, which are in fluid communication via a section 23 of the hydraulic circuit itself.

Further, in the example illustrated, the hydraulic circuit comprises a tank 24 containing a certain quantity of the fluid used by and circulating in the hydraulic circuit. The tank 24 is for example connected to the second proportional valve 22 via a section 25 of the hydraulic circuit, and is connected to the left rear hydraulic motor 8 and to the right rear hydraulic motor 10 via sections 26 and 27 of the hydraulic circuit, respectively.

In the exemplary embodiment illustrated, the left rear hydraulic motor 8 is hydraulically connected with the left front hydraulic motor 4 via the section 28 of the hydraulic circuit, and the right rear hydraulic motor 10 is hydraulically connected with the rear front hydraulic motor 6 via the section 29 of the hydraulic circuit.

The first proportional valve 21 is connected to the left front hydraulic motor 4 and the right front hydraulic motor 6 via sections 30 and 31 of the hydraulic circuit.

The second proportional valve 22 is connected to the left rear hydraulic motor 8 and the right rear hydraulic motor 10 via sections 32 and 33 of the hydraulic circuit.

Clearly, any section of the hydraulic circuit or the whole hydraulic circuit may have a different shape, and each section may be formed by one or more sub-sections and may be formed by suitable pipes and may comprise one or more valves, and other circuit components, etc.

The vehicle 1 comprises also a controller, schematically indicated in figure 1 by the reference number 50.

According to some aspects, the controller is configured to monitor the rotating speed of the wheels 5, 7, 9 and 11.

In one possible example, when the rotating speed of at least one of the rear wheels increases with respect to the rotating speed of all other wheels, the controller 50 is configured to cause:
- at least the rear hydraulic motor connected to the rear wheel whose rotating speed increased and the corresponding front hydraulic motor connected to the front wheel on the same left or right side of the rear wheel whose rotating speed increased to leave the free-wheel mode; and
- the at least rear hydraulic motor, which left the free-wheel mode, to increase pressure in the hydraulic circuit, the increased pressure being transmitted to at least the corresponding front hydraulic motor thereby causing it to generate torque applied to the front wheel connected therewith, thereby re-establishing a correct or normal motricity condition.

For example, if the controller 50 detects that the rotating speed of the left rear wheel 9 increased with respect to the rotating speed of the other wheels, then the controller causes:
- at least the left rear hydraulic motor 8 and the left front hydraulic motor 4 to leave the free-wheel mode; and
- the left rear hydraulic motor 8, which left the free-wheel mode, to increase pressure in the hydraulic circuit, the increased pressure being transmitted to at least the corresponding left front hydraulic motor 4 thereby causing it to generate torque applied to the left front wheel 5 connected therewith, thereby re-establishing a correct or normal motricity condition.

Likewise, if the controller 50 detects that the rotating speed of the right rear wheel 11 increased with respect to the rotating speed of the other wheels, then the controller causes:
- at least the right rear hydraulic motor 10 and the right front hydraulic motor 6 to leave the free-wheel mode; and
- the right rear hydraulic motor 10, which left the free-wheel mode, to increase pressure in the hydraulic circuit, the increased pressure being transmitted to at least the corresponding right front hydraulic motor 6 thereby causing it to generate torque applied to the right front wheel 7 connected therewith, thereby re-establishing a correct or normal motricity condition.

In one possible aspect, when the rotating speed of at least one of the rear wheels 9, 11 increases with respect to the rotating speed of all other wheels, the controller 50 causes at least the rear hydraulic motor connected to the rear wheel whose rotating speed increased and booth the left and right front hydraulic motors 4, 6 to leave, substantially at the same time, the free-wheel mode.

Accordingly, the rear hydraulic motor (left motor 8 or right motor 10) associated with the rear wheel whose rotating speed increased, increases the pressure in the hydraulic circuit. The increased pressure is transmitted to the left and right front hydraulic motors 4 and 6 thereby causing them to generate torque applied to the respective left and right front wheels 5 and 7 connected therewith, thereby re-establishing a correct or normal motricity condition.

In one possible aspect, the first proportional valve 21 is configured for regulating, under the control of the controller 50, the distribution of pressure between at least the left and right front wheels 5 and 7.

In one possible aspect, the controller 50 controls the opening/closing of the first proportional valve 21 for regulating the distribution of pressure between the left and right front wheels 5, 7 based on the actual steering angle of the front axle 2.

In one possible aspect, when the rotating speed of at least one of the rear wheels 9 and 11 increases with respect to the rotating speed of all other wheels, the controller 50 causes all hydraulic motors 4, 6, 8 and 10 to leave, substantially at the same time, the free-wheel mode.

In one possible aspect, the second proportional valve 22 is configured for regulating, under the control of the controller 50, the distribution of pressure between at least the left and right front wheels 5 and 7.

In particular, the second proportional valve 22 is used to limit the power shared to the front wheels altogether.

In one possible aspect, when the speed of the vehicle 1 is below a predetermined threshold, the controller 50 is configured to cause the left and right rear hydraulic motors 8, 10 to leave both, e.g. substantially simultaneously, the free-wheel mode.

The controller 50 can be for example constituted by or part of the onboard electronic control unit (ECU) of the vehicle 1 or a separate controller 50. While the controller 50 is represented in FIG. 1 by a single box, it may include any collection of devices that individually or jointly perform any of the functions or processing disclosed herein. Accordingly, any reference in the disclosure and/or claims to a controller or equivalently to an electronic controller or electronic control unit (ECU), etc., includes reference to one or more such devices.

In particular, the controller 50 may comprise at least one computing device or electronic device capable of including firmware, hardware, and/or executing software instructions to implement the functionality/processing described herein. The controller 50 may include processing circuitry (e.g., processing circuitry including one or more processor devices or control units), a memory, such as the data storage. The processing circuitry may include any number of hardware components for conducting data or signal processing or for executing computer code stored in a memory. The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

The present disclosure provides a vehicle 1 according to the following examples.

Example 1: a vehicle 1 comprising a front axle 2, a rear driving axle 3, a left front hydraulic motor 4 connected to a left front wheel 5, a right front hydraulic motor 6 connected to a right front wheel 7, a left rear hydraulic motor 8 connected to a left rear wheel 9, and a right rear hydraulic motor 10 connected to a right rear wheel 11;
- a hydraulic circuit 21, 22, 23, 24, 25, 26, 27, 28, 29, 30, 31, 32, 33 that hydraulically connects all hydraulic motors, wherein the front and rear hydraulic motors 4, 6, 8, 10 are configured to be in a free-wheel mode under normal motricity conditions;
- a controller 50 that causes, when the rotating speed of at least one of the rear wheels 9, 11 increases with respect to the rotating speed of all other wheels:
- at least the rear hydraulic motor 8 connected to the rear wheel 9 whose rotating speed increased and at least the corresponding front hydraulic motor 4 connected to the front wheel 5 on the same left or right side of the rear wheel whose rotating speed increased to leave the free-wheel mode;
- the at least rear hydraulic motor, which left the free-wheel mode, to increase pressure in the hydraulic circuit, the increased pressure being transmitted to at least the corresponding front hydraulic motor 4 thereby causing it to generate torque applied to the front wheel connected therewith, thus re-establishing normal motricity.

Example 2: The vehicle 1 of example 1, wherein, when the rotating speed of at least one of the rear wheels 9, 11 increases with respect to the rotating speed of all other wheels, the controller 50 causes booth the left and right front hydraulic motors 4, 6 to leave the free-wheel mode.

Example 3: The vehicle 1 as in one or more of the previous examples, wherein the hydraulic circuit comprises at least a first proportional valve 21 for regulating, under the control of the controller 50, the distribution of pressure between at least the left and right front wheels 5, 7.

Example 4: The vehicle 1 as in one or more of the previous examples, wherein the controller 50 controls the opening/closing of the first proportional valve 21 for regulating the distribution of pressure between the left and right front wheels 5, 7 based on the actual steering angle of the front axle 2.

Example 5: The vehicle 1 as in one or more of the previous examples, wherein, when the rotating speed of at least one of the rear wheels 9, 11 increases with respect to the rotating speed of all other wheels, the controller 50 causes all hydraulic motors 4, 6 to leave the free-wheel mode.

Example 6: The vehicle 1 as in one or more of the previous examples, wherein, the hydraulic circuit comprises a second proportional valve 22 for regulating, under the control of the controller 50 the distribution of pressure between at least the left and right rear wheels 5, 7.

Example 7: The vehicle 1 as in one or more of the previous examples, wherein, when the speed of the vehicle is below a predetermined threshold, the controller 50 causes the left and right rear hydraulic motors 8, 10 to leave both the free-wheel mode.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figure. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software entities, each of the above listed terms means and encompasses electronic circuits or parts thereof, as well as stored, embedded or running software codes and/or routines, algorithms, or complete programs, suitably designed for achieving the technical result and/or the functional performances for which such entities are devised.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle (1) comprising a front axle (2), a rear driving axle (3), a left front hydraulic motor (4) connected to a left front wheel (5), a right front hydraulic motor (6) connected to a right front wheel (7), a left rear hydraulic motor (8) connected to a left rear wheel (9), and a right rear hydraulic motor (10) connected to a right rear wheel (11);
- a hydraulic circuit (21, 22, 23, 24, 25, 26, 27, 28, 29, 30, 31, 32, 33) that hydraulically connects all hydraulic motors, wherein the front and rear hydraulic motors (4, 6, 8, 10) are configured to be in a free-wheel mode under normal motricity conditions;
- a controller (50) that causes, when the rotating speed of at least one of the rear wheels (9, 11) increases with respect to the rotating speed of all other wheels:
- at least the rear hydraulic motor (8) connected to the rear wheel (9) whose rotating speed increased and at least the corresponding front hydraulic motor (4) connected to the front wheel (5) on the same left or right side of the rear wheel whose rotating speed increased to leave the free-wheel mode;
- the at least rear hydraulic motor, which left the free-wheel mode, to increase pressure in the hydraulic circuit, the increased pressure being transmitted to at least the corresponding front hydraulic motor (4) thereby causing it to generate torque applied to the front wheel connected therewith.

2. The vehicle (1) as in claim 1 wherein, when the rotating speed of at least one of the rear wheels (9, 11) increases with respect to the rotating speed of all other wheels, the controller (50) causes booth the left and right front hydraulic motors (4, 6) to leave the free-wheel mode.

3. The vehicle (1) as in one or more of the previous claims, wherein the hydraulic circuit comprises at least a first proportional valve (21) which regulates, under the control of the controller (50), the distribution of pressure between at least the left and right front wheels (5, 7).

4. The vehicle (1) as in one or more of the previous claims, wherein the controller (50) controls the opening/closing of the first proportional valve (21) for regulating the distribution of pressure between the left and right front wheels (5, 7) based on the actual steering angle of the front axle (2).

5. The vehicle (1) as in one or more of the previous claims, wherein, when the rotating speed of at least one of the rear wheels (9, 11) increases with respect to the rotating speed of all other wheels, the controller (50) causes all hydraulic motors (4, 6) to leave the free-wheel mode.

6. The vehicle (1) as in one or more of the previous claims, wherein, the hydraulic circuit comprises a second proportional valve (22) which regulates, under the control of the controller (50) the distribution of pressure between at least the left and right rear wheels (5, 7).

7. The vehicle (1) as in one or more of the previous claims, wherein, when the speed of the vehicle is below a predetermined threshold, the controller (50) causes the left and right rear hydraulic motors (8, 10) to leave both the free-wheel mode.

## Amended claims

### Amended claims in accordance with Rule 137(2) EPC.

1. A vehicle (1) comprising a front axle (2), a rear driving axle (3), a left front hydraulic motor (4) connected to a left front wheel (5), a right front hydraulic motor (6) connected to a right front wheel (7), a left rear hydraulic motor (8) connected to a left rear wheel (9), and a right rear hydraulic motor (10) connected to a right rear wheel (11);
- a hydraulic circuit (21, 22, 23, 24, 25, 26, 27, 28, 29, 30, 31, 32, 33) that hydraulically connects all hydraulic motors, wherein the front and rear hydraulic motors (4, 6, 8, 10) are configured to be in a free-wheel mode under normal motricity conditions where traction is provided by the rear wheels only;
- a controller (50) configured to cause, when the rotating speed of at least one of the rear wheels (9, 11) increases with respect to the rotating speed of all other wheels:
- at least the rear hydraulic motor (8) connected to the rear wheel (9) whose rotating speed increased and at least the corresponding front hydraulic motor (4) connected to the front wheel (5) on the same left or right side of the rear wheel whose rotating speed increased to leave the free-wheel mode;
- the at least rear hydraulic motor, which left the free-wheel mode, to increase pressure in the hydraulic circuit, the increased pressure being transmitted to at least the corresponding front hydraulic motor (4) thereby causing it to generate torque applied to the front wheel connected therewith.

2. The vehicle (1) as in claim 1 wherein, when the rotating speed of at least one of the rear wheels (9, 11) increases with respect to the rotating speed of all other wheels, the controller (50) is configured to cause booth the left and right front hydraulic motors (4, 6) to leave the free-wheel mode.

3. The vehicle (1) as in one or more of the previous claims, wherein the hydraulic circuit comprises at least a first proportional valve (21) which regulates, under the control of the controller (50), the distribution of pressure between at least the left and right front wheels (5, 7).

4. The vehicle (1) as of claim 3, wherein the controller (50) is configured to control the opening/closing of the first proportional valve (21) for regulating the distribution of pressure between the left and right front wheels (5, 7) based on the actual steering angle of the front axle (2).

5. The vehicle (1) as in one or more of the previous claims, wherein, when the rotating speed of at least one of the rear wheels (9, 11) increases with respect to the rotating speed of all other wheels, the controller (50) is configured to cause all hydraulic motors (4, 6) to leave the free-wheel mode.

6. The vehicle (1) as in one or more of the previous claims, wherein, the hydraulic circuit comprises a second proportional valve (22) which regulates, under the control of the controller (50) the distribution of pressure between at least the left and right rear wheels (5, 7).

7. The vehicle (1) as in one or more of the previous claims, wherein, when the speed of the vehicle is below a predetermined threshold, the controller (50) is configured to cause the left and right rear hydraulic motors (8, 10) to leave both the free-wheel mode.
